# EUROPÄISCHE PATENTSCHRIFT

(11) **EP 4 344 905 B1**
(45) Veröffentlichungstag und Bekanntmachung des Hinweises auf die Patenterteilung: **06.08.2025**
(21) Anmeldenummer: 23191573.7
(22) Anmeldetag: 16.08.2023
(51) Int. Cl.: B60C 11/24, B60C 23/00

(54) **VERFAHREN ZUR ABSCHÄTZUNG DER PROFILTIEFE VON FAHRZEUGREIFEN BEI FAHRZEUGEN MIT ZWILLINGSBEREIFUNG**
METHOD FOR ESTIMATING THE TREAD DEPTH OF VEHICLE TYRES FOR VEHICLES WITH TWIN TYRES
PROCÉDÉ D'ESTIMATION DE LA PROFONDEUR DE SCULPTURE DE PNEUS DE VÉHICULE DANS DES VÉHICULES À PNEUS JUMELÉS

(30) Priorität: 27.09.2022 DE 102022210222
(43) Veröffentlichungstag der Anmeldung: 03.04.2024
(73) Patentinhaber: Continental Reifen Deutschland GmbH, 30175 Hannover (DE)
(72) Erfinder: Kurz, Martin, 30165 Hannover (DE); Pietsch, Holger, 30165 Hannover (DE); Sahlmüller, Baldo, 30165 Hannover (DE)
(74) Vertreter: Continental Corporation

(56) Entgegenhaltungen:
- WO-A1-2021/168393
- US-A1- 2021 155 055
- US-A1- 2021 181 064

## Beschreibung

Die Erfindung betrifft Verfahren zur Abschätzung der Profiltiefe von Fahrzeugreifen bei einem Fahrzeug mit Zwillingsbereifung sowie ein für die Durchführung des Verfahrens ausgelegtes Fahrzeug. Offenbart wird zudem ein Computerprogrammprodukt zur Durchführung von Schritten des entsprechenden Verfahrens.

Die fortschreitende technische Entwicklung und die zunehmende Digitalisierung betreffen insbesondere auch den Bereich der Fahrzeugtechnik und der Fahrzeugreifen. Es besteht ein fortgesetztes Interesse daran, bei den in Fahrzeugen eingesetzten Komponenten kontinuierlich Betriebsdaten zu erfassen, um beispielsweise die Leistungsfähigkeit und Betriebssicherheit kontinuierlich zu überwachen. Eine wichtige Information, die beispielsweise bei Fahrzeugreifen überwacht werden kann, ist dabei die Profiltiefe des Laufstreifens, da dieser Wert regelmäßig gut mit der Haltbarkeit und dem Zustand der Reifen korreliert und beispielsweise dafür genutzt werden kann, den optimalen Wechselzeitpunkt für Reifen zu bestimmen.

Es besteht grundsätzlich ein großes Interesse daran, die Profiltiefe von Reifen im Betrieb individuell für jeden Reifen und möglichst akkurat abschätzen und/oder berechnen zu können, sodass für sämtliche Reifen eines Fahrzeugs jeweils ein präziser individueller Wert über die Profiltiefe des Laufstreifens verfügbar ist, bevorzugt ohne dass der Fahrzeugführer selbst die Profiltiefe bestimmen muss.

Aus dem Stand der Technik sind verschiedene Verfahren zur Abschätzung und/oder Berechnung der Profiltiefe bekannt, die jedoch mit unterschiedlichen Vor- und Nachteilen behaftet sind. Diesbezüglicher Stand der Technik ist beispielsweise in der CN 112976956 A, der EP 0972658 B1, der US 9340211 B1, der US 2021/0302272 und der DE 102018200358 A1 offenbart.

Beispielsweise sind Verfahren bekannt, welche durch eine Messung der Radialbeschleunigung eines Fahrzeugreifens mithilfe eines Beschleunigungssensors am Innerliner dieses Fahrzeugreifens Rückschlüsse auf die Profiltiefe des Laufstreifens des Fahrzeugreifens erlauben. So offenbart die DE 102015216210 A1 beispielsweise ein Verfahren, welches über ein lineares Gleichungssystem eine Berechnung der Profiltiefe aus der Radialbeschleunigung erlaubt. Die EP 2172759 B1 berechnet die Profiltiefe aus dem Minimum bzw. Maximum des zeitlichen Differentials der Radialbeschleunigung innerhalb eines definierten Zeitintervalls, insbesondere innerhalb eines Zeitintervalls, in welchem der Beschleunigungssensor die Radaufstandsfläche durchläuft. Ein Fahrzeug umfassend eine Achse mit zumindest einer Zwillingsbereifung mit einem inneren Fahrzeugreifen und einem äußeren Fahrzeugreifen sowie ein Verfahren zur Abschätzung der Profiltiefe von Fahrzeugreifen bei einem Fahrzeug mit Zwillingsbereifung ist aus der US2021181064 A1 bekannt.

Andere Verfahren setzten auf die Korrelation der beispielsweise mittels GPS-Daten bestimmten Fahrzeuggeschwindigkeit mit der Umdrehungszahl des Fahrzeugreifens, wobei die Profiltiefe des Fahrzeugreifens aus der Ausgangsprofiltiefe und der Veränderung des dynamischen Rollradius abgeleitet wird, welcher aus der Korrelation der Fahrzeuggeschwindigkeit mit der Umdrehungszahl des Fahrzeugreifens erhalten werden kann.

Diese Verfahren erfordern in den Fahrzeugreifen bzw. in deren Peripherie zumeist eine zusätzliche Sensorik. Durch diese Sensorik steigen jedoch nicht nur die Herstellungskosten der Fahrzeugreifen, sondern eine im Fahrzeugreifen verbaute Sensorik ist in vielen Fällen zudem auch anfällig für Störungen, die durch die im Fahrbetrieb auftretenden starken mechanischen Belastungen verursacht werden können. Aus diesem Grund verfügen viele der Fahrzeugreifen, welche heute im Gebrauch sind, nicht über weitere Sensorik, die den Einsatz entsprechender Verfahren ermöglichen würde.

Vor diesem Hintergrund wurden datenbasierte Verfahren zur Abschätzung der Profiltiefe von Fahrzeugreifen vorgeschlagen, in denen die Profiltiefe von Fahrzeugreifen ausgehend von Fahrzeugparametern, insbesondere der Fahrzeuggeschwindigkeit bzw. der Beschleunigungswerte des Fahrzeuges, sowie einem Satz von unterschiedlichen Einflussparametern, beispielsweise zur Beschaffenheit des Fahrzeuges, zur Art der Reifen oder zu den herrschenden Umgebungsbedingungen, berechnet wird, wobei die Zahl der in die Berechnung eingehenden Einflussparameter mit dem jeweiligen Anwendungsszenario und der angestrebten Präzision der Berechnung variieren kann.

Verfahren zur Abschätzung und/oder Berechnung der Profiltiefe sind vor allem für den Einsatz in der Flottenverwaltung von Nutzfahrzeugen interessant. Viele Nutzfahrzeuge, beispielsweise LKW, weisen eine oder mehrere Achsen mit einer sogenannten Zwillingsbereifung auf, die auch als Doppelbereifung bezeichnet wird. Dies bedeutet, dass die entsprechende Fahrzeugachse auf der Achse zumindest einseitig, im weit überwiegenden Regelfall jedoch beidseitig, ein Zwillingspaket aus zwei nebeneinander angeordneten Fahrzeugreifen aufweist, die gemeinsam an einer entsprechenden Achsaufnahme angeordnet sind. Eine derartige Zwillingsbereifung dient zumeist einer besseren Verteilung des Achsgewichtes und ist für Nutzfahrzeuge regelmäßig vorteilhaft.

Die Erfinder haben jedoch gefunden, dass die nebeneinanderliegende Anordnung von Fahrzeugreifen in einem Zwillingspaket einer Zwillingsbereifung die korrekte Abschätzung der Profiltiefe mit den an sich vorteilhaften datenbasierten Verfahren erschwert, da diese die Fahrzeugreifen in einem Zwillingspaket im Wesentlichen nicht unterscheiden. Die Erfinder haben insoweit jedoch erkannt, dass dies zu unzureichenden Ergebnissen bei der Abschätzung der Profiltiefe führen kann und dass es beim Einsatz dieser Verfahren im Fall von Zwillingsbereifung im schlechtesten Fall dazu kommen kann, dass der tatsächliche Zustand eines der Fahrzeugreifen in der Zwillingbereifung deutlich schlechter ist als es ausgehend von dem datenbasierten Verfahren zur Abschätzung der Profiltiefe anzunehmen gewesen wäre.

Die primäre Aufgabe der vorliegenden Erfindung war es, die vorstehend beschriebenen Nachteile des Standes der Technik auszuräumen oder zumindest abzuschwächen.

Insbesondere war es eine Aufgabe der vorliegenden Erfindung, ein Verfahren zur Abschätzung der Profiltiefe von Fahrzeugreifen anzugeben, mit dem die Profiltiefe von Fahrzeugreifen zuverlässig und effizient abgeschätzt werden kann, wobei wünschenswerterweise auf im Fahrzeugreifen angeordnete Sensorik verzichtet werden sollte, so dass das Verfahren mit allen handelsüblichen Fahrzeugreifen ausführbar sein sollte.

Es war dabei eine Aufgabe der vorliegenden Erfindung, dass das anzugebende Verfahren eine besonders präzise Abschätzung der Profiltiefe von Fahrzeugreifen in Zwillingspaketen von zwillingsbereiften Fahrzeugen ermöglichen sollte.

Es war eine weitere Aufgabe der vorliegenden Erfindung, dass das anzugebende Verfahren insbesondere auch im Fahrbetrieb eine zuverlässige Abschätzung der Profiltiefe von Fahrzeugreifen ermöglichen und dadurch ein möglichst zeit- und kosteneffizientes Flottenmanagement für die Betreiber von Nutzfahrzeugflotten ermöglichen sollte.

Zudem war es eine Aufgabe der vorliegenden Erfindung, ein Fahrzeug anzugeben, welches für die Durchführung des anzugebenden Verfahrens eingerichtet ist.

Es war eine sekundäre Aufgabe der vorliegenden Erfindung, ein Computerprogrammprodukt zur Durchführung von ausgewählten Schritten des anzugebenden Verfahrens bereitzustellen.

Die Erfinder der vorliegenden Erfindung haben nunmehr erkannt, dass sich die vorstehend beschriebenen Aufgaben überraschenderweise lösen lassen, wenn in einem spezifischen datenbasierten Verfahren zur Abschätzung der Profiltiefe von Fahrzeugreifen mit Zwillingsbereifung in jedem Fall die Querbeschleunigung als Fahrparameter in die Berechnung eingeht, wenn als Einflussparameter zumindest Informationen über das Laufstreifenmaterial des Fahrzeugreifens und über die Anfangsprofiltiefe berücksichtigt werden, sofern die Berechnung für die Fahrzeugreifen in der Zwillingsbereifung unter Anwendung eines Positionskorrekturfaktors erfolgt, wie es in den Ansprüchen definiert ist.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Fahrzeuge und Computerprogrammprodukte ergeben sich aus den Merkmalen bevorzugter Verfahren.

Die Erfindung betrifft insbesondere ein Verfahren zur Abschätzung der Profiltiefe von Fahrzeugreifen bei einem Fahrzeug mit Zwillingsbereifung, umfassend die Verfahrensschritte:
a) Fahren eines Fahrzeuges entlang einer vorbestimmten Fahrdistanz in einem Fahrabschnitt, wobei das Fahrzeug zumindest eine Achse mit zumindest einer Zwillingsbereifung mit einem inneren Fahrzeugreifen und einem äußeren Fahrzeugreifen umfasst,
b) Ermitteln einer Mehrzahl von Fahrparametern des Fahrzeugs während der Fahrt im Fahrabschnitt, wobei die Mehrzahl von Fahrparametern zumindest die Querbeschleunigung umfasst,
   sowie jeweils für den inneren Fahrzeugreifen und den äußeren Fahrzeugreifen der Zwillingsbereifung die Verfahrensschritte:
   c) Kalkulieren der im Fahrabschnitt auf den Fahrzeugreifen wirkenden Kräfte ausgehend von den ermittelten Fahrparametern und Bestimmen einer dem Fahrabschnitt zugeordneten Abriebsschärfezahl aus den kalkulierten Kräften unter Berücksichtigung einer Mehrzahl von Einflussparametern, wobei die Einflussparameter ausgewählt sind aus der Gruppe bestehend aus Fahrzeugparametern, Umgebungsparametern und Reifenparametern, wobei die Einflussparameter zumindest Informationen über das Laufstreifenmaterial des Fahrzeugreifens und über die Anfangsprofiltiefe am Anfang des Fahrabschnitts umfassen,
      wobei die Position des jeweiligen Fahrzeugreifens in der Zwillingsbereifung durch einen Positionskorrekturfaktor berücksichtigt wird, und
   d) Abschätzen der Endprofiltiefe am Ende des Fahrabschnitts für den Fahrzeugreifen ausgehend von der jeweiligen Anfangsprofiltiefe am Anfang des Fahrabschnitts unter Berücksichtigung der jeweiligen Abriebsschärfezahl.

Das erfindungsgemäße Verfahren dient der Abschätzung der Profiltiefe von Fahrzeugreifen bei einem Fahrzeug mit Zwillingsbereifung und ist entsprechend vor allem für Nutzfahrzeuge geeignet. Bevorzugt ist entsprechend auch ein erfindungsgemäßes Verfahren, wobei das Fahrzeug ein Nutzfahrzeug, bevorzugt ein LKW oder ein Bus, bevorzugt ein LKW, ist.

Die Vorteile des erfindungsgemäßen Verfahrens zeigen sich mit steigender Zahl der zwillingsbereiften Achsen bzw. der Zahl der Zwillingspakete, da die aus dem Stand der Technik bekannten Verfahren für diese Fahrzeuge häufig besonders fehleranfällig sind. Bevorzugt ist entsprechend ein erfindungsgemäßes Verfahren, wobei das Fahrzeug zwei oder mehr Achsen mit zumindest einer Zwillingsbereifung umfasst.

Im Rahmen der vorliegenden Erfindung wird in einer Zwillingsbereifung jeweils der fahrzeugseitig liegenden bzw. in Richtung des Achsenmittelpunktes weisende Fahrzeugreifen als der innere Fahrzeugreifen angesehen.

Wie bereits vorstehend erläutert, weisen Achsen mit Zwillingsbereifung zumeist beidseitig ein Zwillingspaket auf. In der Praxis ist entsprechend für im Wesentlichen alle Ausführungsformen ein erfindungsgemäßes Verfahren relevant, wobei das Fahrzeug zumindest eine Achse mit beidseitiger Zwillingsbereifung mit jeweils einem inneren Fahrzeugreifen und einem äußeren Fahrzeugreifen umfasst, wobei das Verfahren bevorzugt für sämtliche Fahrzeugreifen der Zwillingsbereifungen durchgeführt wird.

Der Fachmann versteht, dass das erfindungsgemäße Verfahren auf den besonders anspruchsvollen Schritt der Abschätzung der Profiltiefe von Fahrzeugreifen in der Zwillingsbereifung gerichtet ist, dass hierdurch aber nicht ausgeschlossen wird, dass zudem auch weitere Fahrzeugreifen auf normalen Achsen hinsichtlich der Profiltiefe bewertet werden. Bevorzugt ist in diesem Fall ein erfindungsgemäßes Verfahren, wobei das Verfahren zusätzlich für Fahrzeugreifen durchgeführt wird, die nicht Teil einer Zwillingsbereifung sind, wobei beim Bestimmen der Abriebsschärfezahl kein Positionskorrekturfaktor berücksichtigt wird.

Es kann als Vorteil des erfindungsgemäßen Verfahrens gesehen werden, dass dieses für die Abschätzung der Profiltiefe nicht auf Sensorik in den Fahrzeugreifen zurückgreifen muss und entsprechend handelsübliche Fahrzeugreifen eingesetzt werden können. Mit Blick auf die Kosteneffizienz und den Wartungsaufwand ist es entsprechend auch vorteilhaft, solche gewöhnlichen Fahrzeugreifen einzusetzen. Bevorzugt ist folglich ein erfindungsgemäßes Verfahren, wobei der innere Fahrzeugreifen und der äußere Fahrzeugreifen, bevorzugt sämtliche Fahrzeugreifen des Fahrzeuges, keine Geschwindigkeits- oder Beschleunigungssensoren, bevorzugt überhaupt keine elektronischen Sensoren, umfassen.

Die am Ende des erfindungsgemäßen Verfahrens erhaltene Endprofiltiefe der Fahrzeugreifen kann dem Fahrzeugführer vorteilhafterweise unmittelbar als Information zur Verfügung gestellt werden, beispielsweise unmittelbar als Restprofiltiefe oder als Hinweis auf einen anstehenden Wartungs- und/oder Wechseltermin. Von besonders hoher Praxisrelevanz und für im Wesentlichen sämtliche Ausführungsformen bevorzugt ist entsprechend ein erfindungsgemäßes Verfahren, zusätzlich umfassend den Verfahrensschritt:
e) Ausgeben einer Information über die abgeschätzte Endprofiltiefe des inneren Fahrzeugreifens und des äußeren Fahrzeugreifens am Ende des Fahrabschnitts über eine Ausgabeeinheit, bevorzugt über ein elektronische Anzeigevorrichtung.

Der Fachmann versteht, dass die Verfahrensschritte c) und d) des erfindungsgemäßen Verfahrens zweckmäßigerweise von einer elektronischen Datenverarbeitungseinrichtung durchgeführt werden. Die Erfinder schlagen insoweit vor allem zwei unterschiedliche aber gegebenenfalls auch kombiniere Ansätze zur Implementation des erfindungsgemäßen Verfahrens in einem Fahrzeug vor.

Zum einen kann eine elektronische Datenverarbeitungseinrichtung unmittelbar in das Fahrzeug integriert werden. Hierdurch wird in vorteilhafter Weise ein besonders autarkes Fahrzeugsystem erhalten, in welchem das erfindungsgemäße Verfahren auch dann durchgeführt werden kann, wenn zu dem Fahrzeug keine drahtlose Kommunikationsverbindung besteht. Zudem sind entsprechende Ausführungsformen in vielen Fällen besonders robust und kosteneffizient in der Anschaffung. Bevorzugt ist somit zunächst ein erfindungsgemäßes Verfahren, wobei das Fahrzeug eine elektronische Datenverarbeitungseinrichtung umfasst, die dazu eingerichtet ist, jeweils für den inneren Fahrzeugreifen und den äußeren Fahrzeugreifen der Zwillingsbereifung die Verfahrensschritte c) und d) auszuführen.

Darüber hinaus schlagen die Erfinder vor, dass die elektronische Datenverarbeitungseinrichtung statt einer dezentralen Anordnung im Fahrzeug auch als zentrale Einheit, beispielsweise als Server eines Flottenmanagementsystems bereitgestellt werden kann. Hierdurch lässt sich in vorteilhafter Weise die im Fahrzeug benötigte Rechnerkapazität reduzieren. Zudem ist die Wartung durch Software-Updates regelmäßig leichter möglich und es kann beispielsweise eine vorteilhafte Integrierbarkeit in das sonstige Flottenmanagementsystem erreicht werden. Insbesondere bei den weiter unten offenbarten Ausgestaltungen, welche auf den Einsatz von maschinellem Lernen setzen, kann sich die höhere Datendichte, die in einem System aus mehreren zentral gesteuerten Endeinheiten erreicht werden kann, vorteilhaft auf die Qualität der Abschätzung auswirken, da die verwendeten Module besonders effizient trainiert werden können. Bevorzugt ist zusätzlich oder alternativ somit ein erfindungsgemäßes Verfahren, wobei das Fahrzeug eine Vorrichtung zur drahtlosen Datenübertragung umfasst, wobei der Verfahrensschritt b) das Übermitteln der ermittelten Fahrparameter an eine elektronische Datenverarbeitungsvorrichtung in einem drahtlosen Verfahren zur Datenübertragung umfasst.

Nachfolgend werden die Verfahrensschritte des erfindungsgemäßen Verfahrens näher erläutert.

Im Verfahrensschritt a) wird das Fahrzeug zunächst gefahren. Der Fachmann versteht, dass es sich dabei um ein Fahren unter Verwendung der Fahrzeugreifen handelt, welches durch eigenen Antrieb, beispielsweise im Falle eines Busses, oder durch das Ziehen mit einer Zugmaschine erfolgen kann, beispielsweise für einen LKW-Anhänger. Das Verfahren eines Fahrzeuges ohne Reifeneinsatz, beispielsweise auf einem Güterzug oder Transportanhänger, stellt im Sinne der vorliegenden Erfindung kein Fahren des Fahrzeuges dar. Mit anderen Worten handelt es sich in der Praxis insbesondere um ein erfindungsgemäßes Verfahren, wobei das Fahren des Fahrzeuges im Straßenverkehr erfolgt.

Das Fahren erfolgt dabei über eine vorbestimmten Fahrdistanz, wobei die Zeit bzw. die Strecke zwischen dem Anfang und dem Ende der vorbestimmten Fahrdistanz als Fahrabschnitt bezeichnet wird. Der Fahrabschnitt ist im Rahmen der vorliegenden Erfindung das zeitliche bzw. räumliche Intervall, in dem eine Abschätzung der Profiltiefe erfolgt. Der Fachmann versteht, dass die Länge des Fahrabschnitts mit der Datenqualität korreliert, die in das erfindungsgemäße Verfahren eingespeist werden kann. Auch wenn es prinzipiell möglich wäre, sehr kurze Fahrdistanzen wie beispielsweise 100 m anzulegen, schlagen die Erfinder vor, dass die vorbestimmte Fahrdistanz nicht zu kurz gewählt werden sollte, damit eine besonders zuverlässige Ermittlung der Fahrparameter möglich wird. Hierdurch gleichen sich etwaige Messfehler und Unsicherheiten bei der Ermittlung der Fahrparameter über die Zeit aus und besondere Ereignisse während der Fahrt im Fahrabschnitt, beispielsweise starke Vollbremsungen, wirken sich anteilig weniger stark aus. Bevorzugt ist entsprechend ein erfindungsgemäßes Verfahren, wobei die vorbestimmte Fahrdistanz im Bereich von 0,5 bis 20 km, bevorzugt im Bereich von 1 bis 10 km, liegt.

Im erfindungsgemäßen Verfahren ist es notwendig, eine Mehrzahl von Fahrparametern des Fahrzeugs zu bestimmen. Hierbei muss zumindest die Querbeschleunigung ermittelt werden. Da es sich jedoch erfindungsgemäß um eine Mehrzahl von Fahrparametern handelt, muss neben der Querbeschleunigung auch zumindest ein weiterer Fahrparameter, beispielsweise die Längsbeschleunigung, ermittelt werden. Umso mehr Fahrparameter zur Verfügung stehen, umso präziser kann in den meisten Fällen die Kalkulation der wirkenden Kräfte und die Berechnung der Abriebsschärfezahl erfolgen. Bevorzugt ist ein erfindungsgemäßes Verfahren, wobei die Mehrzahl von Fahrparametern zusätzlich zur Querbeschleunigung zumindest die Längsbeschleunigung und/oder die Z-Beschleunigung und/oder die Geschwindigkeit, bevorzugt die Längsbeschleunigung und die Z-Beschleunigung und/oder die Geschwindigkeit, besonders bevorzugt die Längsbeschleunigung und die Z-Beschleunigung und die Geschwindigkeit, umfasst.

Mit Blick auf die Qualität der erhaltenen Daten und die Unmittelbarkeit der Bestimmung im Fahrabschnitt ist es nach Einschätzung der Erfinder besonders vorteilhaft, wenn die Fahrparameter zumindest teilweise, bevorzugt im Wesentlichen vollständig, über fahrzeuginterne Sensoren ermittelt werden, wobei diese in modernen Fahrzeugen häufig ohnehin zur Verfügung stehen, so dass bereits verfügbare Sensoren in synergistischer Weise in das erfindungsgemäße Verfahren zur Abschätzung der Profiltiefe einbezogen werden können. Bevorzugt ist entsprechend ein erfindungsgemäßes Verfahren, wobei das Fahrzeug einen oder mehrere Fahrparametersensoren zur Ermittlung einer Mehrzahl von Fahrparametern des Fahrzeugs während der Fahrt umfasst, wobei die Mehrzahl von Fahrparametern zumindest die Querbeschleunigung umfasst, und/oder wobei das Ermitteln der Mehrzahl von Fahrparametern des Fahrzeugs durch einen oder mehrere Fahrparametersensoren des Fahrzeuges erfolgt, wobei die Fahrparametersensoren bevorzugt ausgewählt sind aus der Gruppe bestehend aus Geschwindigkeitssensoren und Beschleunigungssensoren.

Die Erfinder haben erkannt, dass sich im erfindungsgemäßen Verfahren auch zeitabhängigen Positionsdaten des Fahrzeugs, wie sie beispielweise über GPS zugänglich sind, effizient nutzen lassen. In einer besonders bevorzugten Ausführungsform können diese Daten genutzt werden, um die von Fahrzeugsensoren ermittelten Fahrparameter zu verifizieren und/oder zu korrigieren, beispielsweise in dem eine im Fahrzeug gemessene Geschwindigkeit mit der Geschwindigkeit abgeglichen wird, die aus zeitabhängigen Positionsdaten des Fahrzeuges ermittelt wird, um beispielsweise Fehler in der fahrzeugseitigen Sensorik auszugleichen. Alternativ können in weniger bevorzugten Ausgestaltungen des Verfahrens auch sämtliche für das Verfahren benötigten Fahrparameter aus den zeitabhängigen Positionsdaten ermittelt werden, wobei dieses Vorgehen nach Einschätzung der Erfinder angesichts des derzeitigen Standes der Technologie eher für gröbere Abschätzungen geeignet sein dürfte. Bevorzugt ist zusammenfassend ein erfindungsgemäßes Verfahren, wobei das Ermitteln der Mehrzahl von Fahrparametern des Fahrzeugs durch Auswertung von zeitabhängigen Positionsdaten, bevorzugt GPS-Daten, erfolgt oder dadurch unterstützt, bevorzugt dadurch unterstützt, wird.

Der Fachmann versteht, dass die Fahrparameter des Fahrzeugs während der Fahrt im Fahrabschnitt ermittelt werden und dass das Wort "während" hierbei eine fortgesetzte Bestimmung zu mehreren Zeitpunkten im Fahrabschnitt meint. In Übereinstimmung mit dem fachmännischen Verständnis wird die Kalkulation der zeitabhängig wirkenden Kräfte umso präziser, umso höher die zeitliche Auflösung in der Erfassung der Daten ist. Die Fahrparameter des Fahrzeugs werden, wie im Bereich der Sensor- und Messtechnik üblich, mit einer bestimmten Frequenz bestimmt, die angibt, wie oft der jeweilige Fahrparameter pro Sekunde ermittelt wird. Sehr hohe Ermittlungsfrequenzen ermöglichen dabei eine besonders vorteilhafte zeitliche Auflösung der Fahrparameter, generieren jedoch auch mehr Speicherbedarf auf der Speichereinheit der elektronischen Datenverarbeitungsvorrichtung bzw. erfordern mehr Bandbreite in der Übertragung und können den Energieverbrauch erhöhen. Insofern ist es in der Praxis in vielen Fällen zweckmäßig, die Ermittlungsfrequenzen eher niedrig zu halten. Insoweit schlagen die Erfinder jedoch Untergrenzen der Ermittlungsfrequenzen vor, mit denen sich in jedem Fall eine vorteilhafte und präzise Abschätzung realisieren lässt. Bevorzugt ist insoweit nämlich ein erfindungsgemäßes Verfahren, wobei das Ermitteln der Mehrzahl von Fahrparametern des Fahrzeugs für jeden Fahrparameter mit einer dem Fahrparameter zugeordneten Ermittlungsfrequenz erfolgt, wobei die Ermittlungsfrequenz bevorzugt 4 Hz oder mehr, besonders bevorzugt 6 Hz oder mehr, besonders bevorzugt 12 Hz oder mehr, beträgt.

Im Anschluss an die Verfahrensschritte a) und b) des erfindungsgemäßen Verfahrens werden nun die Verfahrensschritte c) und d) für die zwei Fahrzeugreifen in der Zwillingsbereifung bzw. potentiell für sämtliche Fahrzeugreifen in sämtlichen Zwillingsbereifungen des Fahrzeuges, durchgeführt.

In Verfahrensschritt c) werden aus den ermittelten Fahrparametern zunächst fahrzeugreifenspezifisch die zeitabhängigen Kräfte kalkuliert, die während der Fahrt im Fahrabschnitt auf den jeweiligen Fahrzeugreifen wirken. Bezogen auf das im Bereich der Fahrzeugreifenindustrie gebräuchliche Koordinatensystem erfolgt dies beispielsweise bezogen auf die Kraftkomponenten Fx(t), Fy(t) und Fz(t), d.h. die zeitabhängigen Kräfte in Längsrichtung, Querrichtung und radialer Z-Richtung. Die Kalkulation dieser Kräfte aus den Fahrparametern, insbesondere den ermittelten Beschleunigungen ist für den Fachmann ausgehend von seinem Fachwissen möglich, wobei er die Methodik an die jeweiligen Anforderungen, insbesondere an die Präzision der Bestimmung, anpasst. Hierbei können beispielsweise neben vergleichsweise einfachen Kalkulationsalgorithmen auch referenzbasierte Methoden verwendet werden, die auf den Vergleich mit zuvor aufgenommenen Referenzmessungen oder Referenzsimulationen zurückgreifen, wobei auch Ansätze möglich sind, die auf maschinelles Lernen zurückgreifen. In der überwiegenden Zahl der Fälle wird der Fachmann jedoch auf Simulationsverfahren zurückgreifen, wie sie in der Branche zur Berechnung von Kräften üblich sind. Hierfür stehen dem Fachmann beispielsweise auch eine Vielzahl an kommerziell erhältlichen Software-Lösungen zur Verfügung, die der Fachmann gegebenenfalls gemäß seinen Anforderungen anpassen kann. Bevorzugt ist demnach auch ein erfindungsgemäßes Verfahren, wobei das Kalkulieren der im Fahrabschnitt auf den Fahrzeugreifen wirkenden Kräfte ausgehend von den ermittelten Fahrparametern durch eine elektronische Datenverarbeitungsvorrichtung mittels eines Simulationsprogramms erfolgt.

Aus den im Fahrabschnitt auf den jeweiligen Fahrzeugreifen wirkenden Kräften kann ein Maß für die Belastung der Fahrzeugreifen im Fahrabschnitt ermittelt werden, die Einfluss auf den Abrieb hat. Diese Kennzahl gibt an, wie stark -sprich scharf- die mechanische Belastung des Fahrzeugreifens im Fahrabschnitt war und wie hoch der zu erwartende Abrieb ist. Vor diesem Hintergrund wird im Rahmen der vorliegenden Erfindung zweckmäßigerweise von der Abriebsschärfezahl gesprochen. In Übereinstimmung mit dem fachmännischen Verständnis ist dabei in der praktischen Umsetzung des erfindungsgemäßen Verfahrens jedoch der genaue Name dieses Parameters ebenso wenig relevant, wie die programmiertechnische Umsetzung des Parameters, beispielsweise in dem Computerprogrammprodukt. Beispielsweise ist es denkbar, dass die Abriebsschärfezahl je nach Berechnungsmethode unterschiedliche Dimensionen aufweist oder sogar als Satz von mehreren Abriebsschärfezahlen erzeugt wird. Maßgeblich ist für die Abriebsschärfezahl in Übereinstimmung mit dem fachmännischen Verständnis lediglich, dass die Abriebsschärfezahl ein aus den kalkulierten zeitabhängigen Kräften bestimmtes Maß für die abriebsrelevante mechanische Belastung des jeweiligen Fahrzeugreifens ist, die dieser im Fahrabschnitt erfahren hat.

Erfindungsgemäß erfolgt das Kalkulieren der im Fahrabschnitt auf den Fahrzeugreifen wirkenden Kräfte sowie die Berechnung der dem Fahrabschnitt zugeordneten Abriebsschärfezahl aus den kalkulierten Kräften, jeweils unter Berücksichtigung eine Mehrzahl von Einflussparametern. Diese Einflussparameter, bei denen es sich um Fahrzeugparameter, Umgebungsparameter und Reifenparameter handelt, beeinflussen somit die Kalkulation der Kräfte und/oder die Berechnung der dem Fahrabschnitt zugeordneten Abriebsschärfezahl, wobei die Erfinder erkannt haben, dass diese Einflussparameter für ein Funktionieren des erfindungsgemäßen Verfahrens in jedem Fall Informationen über das Laufstreifenmaterial des Fahrzeugreifens sowie über die Anfangsprofiltiefe am Anfang des Fahrabschnitts umfassen müssen, wobei es sich jeweils um Reifenparameter, d.h. Eigenschaften der entsprechenden Fahrzeugreifen handelt.

Hierbei werden die Fahrzeugparameter nach Einschätzung der Erfinder in zweckmäßiger Weise überwiegend, bzw. in einigen Fällen ggf. sogar ausschließlich, beim Kalkulieren der im Fahrabschnitt auf den Fahrzeugreifen wirkenden Kräfte berücksichtigt, wobei die Fahrzeugparameter, bspw. Informationen zu den Fahrwerkseigenschaften, insbesondere als Eingabe in die Simulation der Kräfte eingehen können. Die Umgebungsparameter und Reifenparameter werden im Gegenzug eher bei der Bestimmung der Abriebsschärfezahl eingehen, beispielsweise weil die Auswirkung einer Abriebsschärfezahl im Lichte der herrschenden Umgebungstemperarturen und dem Reifentyp, beispielsweise der Ausführung als Winterreifen, bestimmt wird.

Auch in Verfahrensschritt c) gilt nach Einschätzung der Erfinder, dass eine größere Zahl an Einflussparameter prinzipiell die Qualität der erhaltenen Abschätzung erhöhen wird, wobei jedoch in der Praxis für jeden Einflussparameter abzuwägen sein wird, ob die Berücksichtigung den Mehraufwand in der Berechnung rechtfertigt. Bevorzugt ist ein erfindungsgemäßes Verfahren, wobei das Kalkulieren der im Fahrabschnitt auf den Fahrzeugreifen wirkenden Kräfte und das Bestimmen der dem Fahrabschnitt zugeordneten Abriebsschärfezahl aus den kalkulierten Kräften unter Berücksichtigung von drei oder mehr, bevorzugt vier oder mehr, besonders bevorzugt sechs oder mehr, ganz besonders bevorzugt acht oder mehr, Einflussparametern erfolgt.

Nach Einschätzung der Erfinder ist eine umfassende Berücksichtigung von Fahrzeugparametern zielführend, um insbesondere bereits bei der Kalkulation der Kräfte ein möglichst genaues Bild von den Kräften und deren zeitlicher Entwicklung zu erhalten. Bevorzugt ist entsprechend auch ein erfindungsgemäßes Verfahren, wobei das Kalkulieren der im Fahrabschnitt auf den Fahrzeugreifen wirkenden Kräfte und/oder das Bestimmen der dem Fahrabschnitt zugeordneten Abriebsschärfezahl, bevorzugt das Kalkulieren der im Fahrabschnitt auf den Fahrzeugreifen wirkenden Kräfte, unter Berücksichtigung eines oder mehrerer, bevorzugt zwei oder mehr, besonders bevorzugt drei oder mehr, Fahrzeugparameter erfolgt, wobei die Fahrzeugparameter besonders bevorzugt im Rahmen einer Kräftesimulation berücksichtigt werden.

Bevorzugt ist bei Berücksichtigung von Fahrzeugparametern ein erfindungsgemäßes Verfahren, wobei die Fahrzeugparameter ausgewählt sind aus der Gruppe bestehend aus Informationen zum Radstand, zur Spurbreite, zum Fahrzeuggewicht, zur Radlast, zum Reifensturz, zum Schräglauf, zur Antriebsart und zum Antriebskonzept. Bevorzugt ist bei Berücksichtigung von Fahrzeugparametern zusätzlich oder alternativ ein erfindungsgemäßes Verfahren, wobei die Fahrzeugparameter in Abhängigkeit vom Fahrzeugtyp und/oder von der Fahrzeugkonfiguration bereitgestellt werden, bevorzugt auf der Speichereinheit einer elektronische Datenverarbeitungsvorrichtung.

Die Berücksichtigung von Umgebungsparametern ist nach Einschätzung der Erfinder besonders dann vorteilhaft, wenn die in einem Anwendungsszenario zu erwartenden Umweltbedingungen deutlich von denen abweichen, für die das erfindungsgemäße Verfahren optimiert wurde, beispielsweise weil Referenzmessungen in Regionen mit gemäßigtem Klima durchgeführt wurden, das erfindungsgemäße Verfahren jedoch in einer tropischen oder arktischen Region eingesetzt werden soll. Zudem ist eine Berücksichtigung von Umgebungsparametern zweckmäßig, wenn im Anwendungsszenario größere Variationen in den Umgebungsbedingungen zu erwarten sind, beispielsweise in Folge von ausgeprägten Jahreszeitenwechseln. Die Berücksichtigung kann nach Einschätzung der Erfinder in vielen Fällen besonders leicht erfolgten, beispielsweise als Skalierungsfaktoren für den sich ergebenden Abrieb, die beispielsweise aus Referenzmessungen bei unterschiedlichen Umweltbedingungen erhalten werden können. Bevorzugt ist damit ein erfindungsgemäßes Verfahren, wobei das Kalkulieren der im Fahrabschnitt auf den Fahrzeugreifen wirkenden Kräfte und/oder das Bestimmen der dem Fahrabschnitt zugeordneten Abriebsschärfezahl, bevorzugt das Bestimmen der dem Fahrabschnitt zugeordneten Abriebsschärfezahl, unter Berücksichtigung eines oder mehrerer, bevorzugt zwei oder mehr, besonders bevorzugt drei oder mehr, Umgebungsparameter erfolgt.

Bevorzugt ist ein erfindungsgemäßes Verfahren, wobei die Umgebungsparameter ausgewählt sind aus der Gruppe bestehend aus Informationen zur Umgebungstemperatur, zur Fahrbahnfeuchtigkeit, zur Witterung und zur Fahrbahnrauigkeit.

Für die Gewinnung der Umgebungsparameter schlagen die Erfinder vor, dass diese besonders effizient und unmittelbar durch Sensoren erfasst werden können, die im Fahrzeug ohnehin vorgesehen sind. Bevorzugt ist in diesem Fall ein erfindungsgemäßes Verfahren, wobei die Umgebungsparameter zumindest teilweise durch einen oder mehrere Umgebungssensoren des Fahrzeuges erhalten werden.

Zusätzlich oder alternativ können Umgebungsparameter aber auch zumindest teilweise indirekt unter Rückgriff auf Positionsdaten und damit verknüpfte Informationen gewonnen werden, so dass insbesondere bei älteren Fahrzeugen auf eine interne Sensorik verzichtet werden kann. Aus dem Standort des Fahrzeuges können beispielsweise Informationen zum Fahrbahnuntergrund beispielsweise, ob es sich um eine Autobahn, eine Landstraße oder einen Feldweg handelt, oder zu dem lokalen Wetterbericht und den Umgebungstemperaturen erhalten werden. Bevorzugt ist somit zusätzlich oder alternativ ein erfindungsgemäßes Verfahren, wobei die Umgebungsparameter zumindest teilweise durch Abgleich von zeitabhängigen Positionsdaten, bevorzugt GPS-Daten, mit ortsaufgelösten Umgebungsdaten erhalten werden. Bevorzugt ist insoweit ein erfindungsgemäßes Verfahren, wobei die ortsaufgelösten Umgebungsdaten ausgewählt sind aus der Gruppe von Wetterdaten und Straßenkarten mit Angabe des Straßentyps und/oder des Fahrbahnbelags.

Erfindungsgemäß müssen bereits zumindest zwei Reifenparameter berücksichtigt werden, nämlich die Informationen über das Laufstreifenmaterial des Fahrzeugreifens und die Anfangsprofiltiefe des Fahrzeugreifens am Anfang des Fahrabschnitts.

Der erste dieser Reifenparameter ist nach Einschätzung der Erfinder wichtig, da die Materialeigenschaften des Laufstreifens maßgeblich für den zu erwartenden Abrieb verantwortlich sind. Das Laufstreifenmaterial kann insbesondere durch den Vergleich mit Referenzmessungen an ähnlichen oder identischen Laufstreifenmaterialien berücksichtigt werden, beispielsweise wenn in Referenzexperimenten für ein oder mehrere charakteristische Materialien ein Referenzabriebsverhalten unter geeigneten Abriebsschärfezahlen, ggf. unter spezifischen Umgebungs- bzw. Straßentemperaturen, bestimmt wird. Bevorzugt ist dementsprechend auch ein erfindungsgemäßes Verfahren, wobei die Informationen über das Laufstreifenmaterial des Fahrzeugreifens Informationen zu physikalisch-chemischen Eigenschaften des Laufstreifenmaterials, bevorzugt zur Glasübergangstemperatur des im Laufstreifen eingesetzten Polymers und/oder zum Abriebswiderstand des Laufstreifens, bevorzugt zum Abriebswiderstand des Laufstreifens, umfassen.

Der zweite dieser Reifenparameter ist wichtig, da die jeweilige Abriebsrate auch von der aktuellen Profiltiefe abhängt. Dies wird häufig auf die unterschiedliche Steifigkeit der einzelnen Profilklötze in Abhängigkeit von der Profiltiefe und auf das dadurch bedingte unterschiedliche "Ausschnappverhalten" beim Austreten aus der Bodenaufstandsfläche zurückgeführt. Die Berücksichtigung dieses Reifenparameters ist dabei in vorteilhafter Weise regelmäßig nicht mit Mehraufwand verbunden, da die Anfangsprofiltiefe am Anfang des Fahrabschnitts in den meisten Fällen ohnehin als Ausgangsgröße für die Berechnung der Endprofiltiefe herangezogen werden wird, da die Angabe von Informationen über absolute Profiltiefen in der Praxis häufig gegenüber lediglich relativen Veränderungen bevorzugt werden.

Zum Erhalt der benötigten Information über die Anfangsprofiltiefe des Fahrzeugreifens am Anfang des Fahrabschnitts sehen die Erfinder insbesondere zwei Optionen, wobei die Bestimmung der Anfangsprofiltiefe am Anfang des Fahrabschnitts durch tatsächliche Messung, beispielsweise händisch durch den Fahrzeugführer, regelmäßig besonders genaue Ergebnisse in der Abschätzung der späteren Endprofiltiefe liefert. Da dieses Vorgehen in der Praxis allerdings nur für den jeweils ersten Fahrabschnitt jeder Fahrt praktikabel ist, ist diese Verfahrensführung weniger bevorzugt. Vor allem für bestimmte Anwendungen mit hohen Anforderungen an die Präzision der Abschätzung bevorzugt ist ein erfindungsgemäßes Verfahren, wobei die Anfangsprofiltiefe am Anfang des Fahrabschnitts vor dem Fahrabschnitt gemessen wird.

Insbesondere mit Blick auf die Arbeitsbelastung des Fahrzeugführers bevorzugt ist es hingegen, wenn das Ergebnis einer ersten Abschätzung im erfindungsgemäßen Verfahren nachfolgend in dem sich anschließenden Fahrabschnitt als Ausgangspunkt verwendet wird, was vorteilhafterweise so weit geführt werden kann, dass die initiale Eingabe der Ausgangsprofiltiefe lediglich einmal erfolgt, bspw. beim Reifenwechsel, und das Verfahren nachfolgend jeweils mit Werten weiterarbeitet, die es zuvor als Ergebnis einer Abschätzung erhalten hat. Besonders bevorzugt ist entsprechend ein erfindungsgemäßes Verfahren, wobei das Verfahren für zwei oder mehr Fahrabschnitte durchgeführt wird, wobei für die Anfangsprofiltiefe am Anfang des zweiten oder eines weiteren Fahrabschnitts die für den vorangegangenen Fahrabschnitt abgeschätzte Endprofiltiefe am Ende des vorangegangenen Fahrabschnitts verwendet wird.

Neben den erfindungsgemäß auf jeden Fall zu berücksichtigenden Reifenparametern kann es zweckmäßig sein, für eine weitere Steigerung der Präzision weitere Reifenparameter zu berücksichtigen. Bevorzugt ist ein erfindungsgemäßes Verfahren, wobei das Kalkulieren der im Fahrabschnitt auf den Fahrzeugreifen wirkenden Kräfte und/oder das Bestimmen der dem Fahrabschnitt zugeordneten Abriebsschärfezahl, bevorzugt das Bestimmen der dem Fahrabschnitt zugeordneten Abriebsschärfezahl, unter Berücksichtigung von drei oder mehr, bevorzugt vier oder mehr, besonders bevorzugt fünf oder mehr, Reifenparametern erfolgt.

Bevorzugt ist dabei ein erfindungsgemäßes Verfahren, wobei die Reifenparameter ausgewählt sind aus der Gruppe bestehend aus Informationen zur Reifengröße, zum Reifendruck, zur Profilgeometrie und zur Reifensteifigkeit. Bevorzugt ist zusätzlich oder alternativ ein erfindungsgemäßes Verfahren, wobei die Reifenparameter in Abhängigkeit vom Reifentyp und/oder der Reifenkonfiguration der Fahrzeugreifen bereitgestellt werden, bevorzugt auf der Speichereinheit einer elektronische Datenverarbeitungsvorrichtung.

In der Praxis werden die Reifenparameter von zwei Fahrzeugreifen einer Zwillingsbereifung nach Einschätzung der Erfinder häufig in großen Teilen identisch sein, beispielsweise hinsichtlich des Reifentyps und/oder des Reifenprofils. Die Erfinder haben aber erkannt, dass unter den verschiedenen Reifenparametern ein Parameter häufiger zwischen den Fahrzeugreifen einer Zwillingsbereifung variiert, nämlich der Reifendruck. Gerade bei starker Sonneneinstrahlung kann der Reifendruck auch bei ursprünglich gleicher Befüllung der Fahrzeugreifen zwischen dem inneren und dem äußeren Fahrzeugreifen variieren. Ein Fahrzeugreifen mit höherem Luftdruck wird aber mehr Last tragen als ein Fahrzeugreifen mit niedrigerem Luftdruck, so dass sich ein stärkerer Abrieb ergibt. Für eine besonders weitgehende Berücksichtigung der Besonderheiten einer Zwillingsbereifung bei der Abschätzung der verbleibenden Profiltiefe ist entsprechend ein erfindungsgemäßes Verfahren besonders bevorzugt, wobei das Kalkulieren der im Fahrabschnitt auf den Fahrzeugreifen wirkenden Kräfte und/oder das Bestimmen der dem Fahrabschnitt zugeordneten Abriebsschärfezahl, bevorzugt das Bestimmen der dem Fahrabschnitt zugeordneten Abriebsschärfezahl, unter Berücksichtigung eines oder mehrerer Reifenparameter erfolgt, wobei zumindest einer der Reifenparameter, bevorzugt der Reifendruck, für den inneren Fahrzeugreifen und den äußeren Fahrzeugreifen verschieden ist.

Losgelöst von etwaigen Druckunterschieden zwischen dem inneren und dem äußeren Fahrzeugreifen einer Zwillingsbereifung haben die Erfinder erkannt, dass mit einem Positionskorrekturfaktor berücksichtigt werden muss, dass die kurvenaußenseitigen Fahrzeugreifen der Zwillingsbereifung bei Kurvenfahrten stärkere Kräfte erfahren als die kurveninnenseitigen Fahrzeugreifen. Hierdurch erfahren die kurvenaußenseitigen Fahrzeugreifen der Zwillingsbereifung einen höheren Abrieb. Mit anderen Worten handelt es sich um ein erfindungsgemäßes Verfahren, wobei der Positionskorrekturfaktor bevorzugt als Korrekturfaktor auf die in Folge von Querbeschleunigung erfahrenen Kräfte, insbesondere auf die Kraft Fy(t) angewandt wird.

Der Positionskorrekturfaktor kann vom Fachmann in der einfachsten Ausgestaltung beispielsweise weitgehend abgeschätzt werden, um für die Fahrzeugreifen der Zwillingspakets zu berücksichtigen, welchen Anteil Rechts- bzw. Linkskurven an der gefahrenen Strecke im Fahrabschnitt hatten. Bevorzugt ist insoweit ein erfindungsgemäßes Verfahren, wobei der Positionskorrekturfaktor während einer Kurvenfahrt für jeden Fahrzeugreifen der Zwillingsbereifung im Bereich von 0,8 bis 1,2, bevorzugt im Bereich von 0,9 bis 1,1, besonders bevorzugt im Bereich von 0,95 bis 1,05, liegt, wobei Werte über 1 für kurveninnenseitige Fahrzeugreifen gelten und umgekehrt.

**In** Verfahrensschritt d) wird nunmehr die Endprofiltiefe am Ende des Fahrabschnitts ausgehend von der Anfangsprofiltiefe am Anfang des Fahrabschnitts unter Berücksichtigung der jeweiligen Abriebsschärfezahl abgeschätzt.

Hierfür stehen dem Fachmann eine Vielzahl von Optionen zur Verfügung. Die Abschätzung kann beispielsweise durch Abgleich mit Daten erfolgen, die in Referenzmessungen für Fahrzeugreifen mit entsprechenden Abriebsschärfezahlen aufgenommen wurden, wobei beispielsweise eine relative Änderung der Profiltiefe und/oder eine Reduktion der Profiltiefe um einen absoluten Wert und/oder eine resultierende Endprofiltiefe erhalten werden können, wobei die Einflussparameter, beispielsweise die Temperatur, ggf. erneut berücksichtigt werden können.

Beispielhaft ist ein erfindungsgemäßes Verfahren, wobei beim Abschätzen der Endprofiltiefe am Ende des Fahrabschnitts ein Abriebswert von der Anfangsprofiltiefe abgezogen wird, wobei sich der Abriebswert aus der Multiplikation der Fahrdistanz mit der bestimmten Abriebsschärfezahlen und mit dem Quotienten aus einem Referenz-Abriebswert und einer zugehörigen Referenzabriebsschärfezahl ergibt, wobei der Referenz-Abriebswert und die zugehörige Referenzabriebsschärfezahl aus einer oder mehreren Referenzmessungen des Abriebverhaltens von Referenzfahrzeugreifen erhalten werden. Weiter beispielhaft ist dabei ein erfindungsgemäßes Verfahren, wobei der Abriebswert als temperaturkorrigierter Abriebswert durch zusätzliche Multiplikation mit eine Temperaturfaktor, beispielsweise dem Quotienten aus der Umgebungstemperatur (in Kelvin) bei der Bestimmung der Abriebsschärfezahlen und der Umgebungstemperatur bei der Bestimmung der Referenzabriebsschärfezahl erhalten wird.

Bevorzugt ist insoweit ein erfindungsgemäßes Verfahren, wobei die Referenzfahrzeugreifen hinsichtlich zumindest eines, bevorzugt hinsichtlich der überwiegenden Zahl, besonders bevorzugt hinsichtlich sämtlicher, Reifenparameter, bevorzugt zumindest hinsichtlich des Laufstreifenmaterials, im Wesentlichen den Reifenparametern der Fahrzeugreifen entsprechen. Bevorzugt ist insoweit zusätzlich oder alternativ auch ein erfindungsgemäßes Verfahren, wobei die Referenzabriebsschärfezahl in einem Referenzverfahren kalkuliert wird, welches hinsichtlich zumindest eines, bevorzugt hinsichtlich der überwiegenden Zahl, besonders bevorzugt hinsichtlich sämtlicher, Fahrzeugparameter im Wesentlichen den Fahrzeugparametern des Verfahrens entspricht.

Zudem kann die Abschätzung der Endprofiltiefe durch den Einsatz von maschinellem Lernen erfolgen, wobei der Fachmann beispielsweise entsprechende kommerziell erhältliche Programme im Rahmen eines überwachten Lernens mit bekannten Abriebsschärfezahlen und zugehörigen Abriebswerten sowie ggf. weiteren Einflussparametern aus Referenzexperimenten trainieren kann. Bevorzugt ist in diesem Fall ein erfindungsgemäßes Verfahren, wobei die Abschätzung der Endprofiltiefe am Ende des Fahrabschnitts mit einem auf maschinellem Lernen basierenden Abschätzungsmodul erfolgt, welches auf der Speichereinheit einer elektronischen Datenverarbeitungsvorrichtung gespeichert ist, wobei die elektronische Datenverarbeitungsvorrichtung dazu eingerichtet ist, die Fahrdistanz im Fahrabschnitt, die bestimmte Abriebsschärfezahl des Fahrzeugreifens im Fahrabschnitt und die Anfangsprofiltiefe am Anfang des Fahrabschnitts sowie optional weitere der Einflussparameter, als Eingabe in das Abschätzungsmodul zu geben und die Endprofiltiefe ausgehend von der Eingabe abzuschätzen, wobei das Abschätzungsmodul dazu trainiert ist, aus der Fahrdistanz im Fahrabschnitt, der bestimmten Abriebsschärfezahl des Fahrzeugreifens im Fahrabschnitt und der Anfangsprofiltiefe am Anfang des Fahrabschnitts sowie optional weiteren der Einflussparameter, die Endprofiltiefe am Ende des Fahrabschnitts abzuschätzen, wobei das Training mit einem Satz von Trainingsdaten erfolgt, welches eine Vielzahl von bekannten Profiltiefen umfasst, die ausgehend von bekannten Ausgangsprofiltiefen in Folge von bekannten Abriebsschärfezahlen nach bekannten Fahrdistanzen erhalten wurden.

Bevorzugt ist dabei ein erfindungsgemäßes Verfahren, wobei das Abschätzungsmodul auf einem Algorithmus zum maschinellen Lernen basiert, der ausgewählt ist aus der Gruppe bestehend aus überwachtem Lernen, bevorzugt ausgewählt ist aus der Gruppe bestehend aus logistische Regression, Support vector machines, K-nearest neighbors-Verfahren, Entscheidungsbaumverfahren und künstlichen neuronalen Netzen, bevorzugt künstlichen neuronalen Netzen, und/oder wobei das Abschätzungsmodul erhalten wird durch Anwendung eines Algorithmus zum maschinellen Lernen auf den Satz von Trainingsdaten, wobei der Algorithmus ausgewählt ist aus der Gruppe bestehend aus überwachtem Lernen, bevorzugt ausgewählt ist aus der Gruppe bestehend aus logistische Regression, Support vector machines, K-nearest neighbors-Verfahren, Entscheidungsbaumverfahren und künstlichen neuronalen Netzen, bevorzugt künstlichen neuronalen Netzen.

Bevorzugt ist zusätzlich oder alternativ ein erfindungsgemäßes Verfahren, wobei das Training mit einem Satz von Trainingsdaten erfolgt, die hinsichtlich zumindest eines, bevorzugt hinsichtlich der überwiegenden Zahl, besonders bevorzugt hinsichtlich sämtlicher, Einflussparameter den Einflussparametern des Verfahrens entsprechen.

Die Erfindung betrifft zu dem ein Fahrzeug, welches spezifisch für die Durchführung des erfindungsgemäßen Verfahrens ausgelegt ist, umfassend:
i) zumindest eine Achse mit zumindest einer Zwillingsbereifung mit einem inneren Fahrzeugreifen und einem äußeren Fahrzeugreifen,
ii) einen oder mehrere Fahrparametersensoren zur Ermittlung einer Mehrzahl von Fahrparametern des Fahrzeugs während der Fahrt entlang einer vorbestimmten Fahrdistanz in einem Fahrabschnitt, wobei die Mehrzahl von Fahrparametern zumindest die Querbeschleunigung umfasst, und
iii) eine elektronische Datenverarbeitungseinrichtung, wobei die Datenverarbeitungsvorrichtung dazu eingerichtet ist, jeweils für den inneren Fahrzeugreifen und den äußeren Fahrzeugreifen der Zwillingsbereifung die folgenden Berechnungsschritte auszuführen:
   cc) Kalkulieren der im Fahrabschnitt auf den Fahrzeugreifen wirkenden Kräfte ausgehend von den ermittelten Fahrparametern und Bestimmen einer dem Fahrabschnitt zugeordneten Abriebsschärfezahl aus den kalkulierten Kräften unter Berücksichtigung einer Mehrzahl von Einflussparametern, wobei die Einflussparameter ausgewählt sind aus der Gruppe bestehend aus Fahrzeugparametern, Umgebungsparametern und Reifenparametern, wobei die Einflussparameter zumindest Informationen über das Laufstreifenmaterial des Fahrzeugreifens und über die Anfangsprofiltiefe am Anfang des Fahrabschnitts umfassen,
      wobei die Position des jeweiligen Fahrzeugreifens in der Zwillingsbereifung durch einen Positionskorrekturfaktor berücksichtigt wird, und
   dd) Abschätzen der Endprofiltiefe am Ende des Fahrabschnitts für den Fahrzeugreifen ausgehend von der jeweiligen Anfangsprofiltiefe am Anfang des Fahrabschnitts unter Berücksichtigung der jeweiligen Abriebsschärfezahl.

Offenbart wird abschließend zudem ein Computerprogrammprodukt, umfassend Befehle, die bei der Ausführung des Programms durch eine elektronische Datenverarbeitungsvorrichtung, bevorzugt einer elektronischen Datenverarbeitungsvorrichtung eines erfindungsgemäßen Fahrzeuges, diese veranlasst, die Verfahrensschritte c) und d) des erfindungsgemäßen Verfahrens auszuführen.

Nachfolgend werden bevorzugte Ausführungsformen der Erfindung unter Bezugnahme auf die beiliegenden Figuren näher erläutert und beschrieben. Dabei zeigen:
- Fig. 1: ein schematisches Flussdiagramm des erfindungsgemäßen Verfahrens in einer bevorzugten Ausführungsform; und
- Fig. 2: ein schematisches Flussdiagramm für einen beispielhaften Verfahrensschritt c) in einer bevorzugten Ausführungsform.

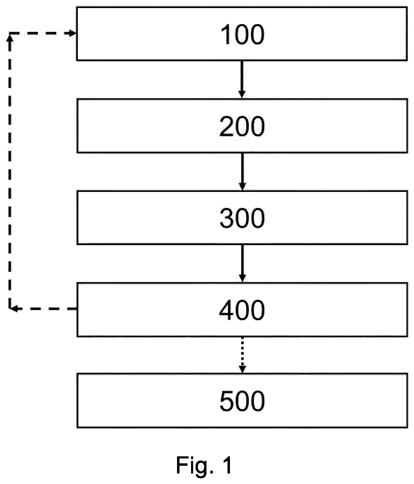

Fig. 1 zeigt ein vereinfachtes Flussdiagramm des erfindungsgemäßen Verfahrens in einer bevorzugten Ausführungsform, wie es beispielsweise in einem erfindungsgemäßen Fahrzeug mit Zwillingsbereifung, beispielsweise einem LKW mit zwei zwillingsbereiften Achsen, durchgeführt werden kann, um die Profiltiefe der Fahrzeugreifen im Zwillingspaket abzuschätzen.

In Verfahrensschritt a) 100 wird das Fahrzeug entlang einer vorbestimmten Fahrdistanz von beispielsweise 5 km in einem Fahrabschnitt gefahren, wobei dieser Fahrabschnitt einen Teil einer größeren Route bilden kann, wobei es auch möglich ist, dass der Fahrabschnitt durch Pausen oder Standzeiten unterbrochen wird.

In Verfahrensschritt b) 200 werden die Querbeschleunigung und weitere Fahrparameter 10 bestimmt. Im bevorzugten Verfahren der Fig. 1 umfassen die Fahrparameter 10 zusätzlich zur Querbeschleunigung auch die Längsbeschleunigung und die Z-Beschleunigung. Diese Fahrparameter 10 werden im beispielhaften Verfahren durch integrierte Fahrparametersensoren des Fahrzeuges mit einer Ermittlungsfrequenz von etwa 10 Hz ermittelt und aufgezeichnet, wobei die Ermittlung der Fahrzeuggeschwindigkeit zudem durch Auswertung von zeitabhängigen GPS-Daten unterstützt wird, um die Korrektheit der Fahrparameter 10 zu verifizieren.

Im bevorzugten Verfahren der Fig. 1 umfasst das Fahrzeug eine im Fahrzeug integrierte elektronische Datenverarbeitungseinrichtung, die nicht nur die Ermittlung Fahrparameter 10 steuert, sondern auch dazu eingerichtet ist, jeweils für den inneren Fahrzeugreifen und den äußeren Fahrzeugreifen sämtlicher Zwillingsbereifungen die Verfahrensschritte c) 300 und d) 400 auszuführen.

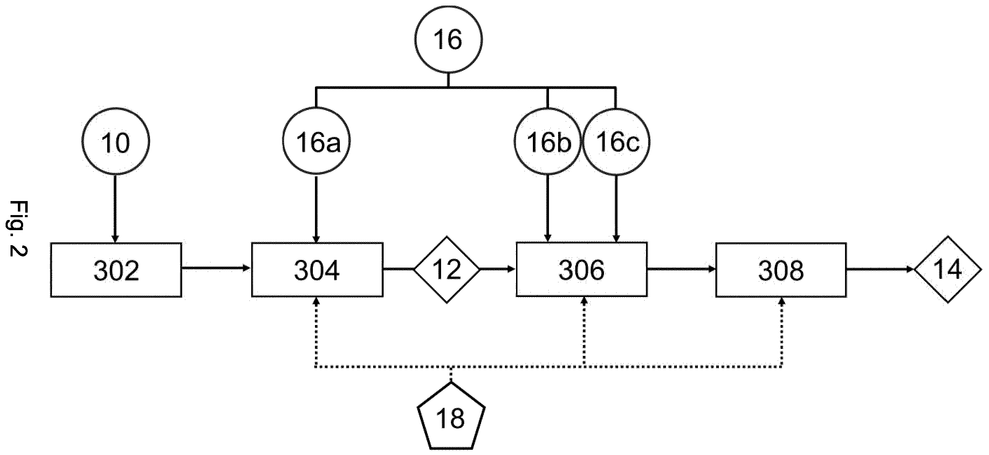

In Verfahrensschritt c) 300 werden aus den ermittelten Fahrparametern 10 die auf die jeweiligen Reifen wirkenden Kräfte 12 kalkuliert und daraus Abriebsschärfezahlen für die Fahrzeugreifen im Fahrabschnitt bestimmt. Dieser Verfahrensschritt ist in Fig. 2 in einem schematischen Flussdiagramm weiter visualisiert.

In der bevorzugten Verfahrensführung der Fig. 2 werden die ermittelten Fahrparameter 10 in der Form von Rohdaten in einem ersten Teilschritt 302 zunächst aufbereitet, wobei beispielsweise Filter oder Glättungsalgorithmen auf die Daten angewandt oder identifizierte Artefakte entfernt werden, um einen aufbereitete Datensatz an Fahrparametern 10 zu erhalten. Aus diesen Datensatz an Fahrparametern 10 werden im anschließenden Teilschritt 304 die auf die jeweiligen Fahrzeugreifen wirkenden Kräfte 12 kalkuliert, was in der bevorzugten Verfahrensführung der Fig. 2 durch Simulation der wirkenden Kräfte 12 mit einer Simulationssoftware erfolgt, wobei für die Optimierung des Simulationsergebnisses eine Vielzahl an Fahrzeugparametern 16a als Einflussparameter 16 in der Simulation berücksichtigt werden, nämlich der Radstand, die Spurbreite, das Fahrzeuggewicht und die resultierende Radlast, der Reifensturz, der Schräglauf und Informationen zur Antriebsart bzw. zum Antriebskonzept. Die resultierenden Kräfte 12 werden im gezeigten Beispiel der Fig. 2 für jeden Fahrzeugreifen jeweils als Kraftkomponenten entlang der drei Raumrichtungen Fx(t), Fy(t) und Fz(t) bestimmt.

Aus den kalkulierten Kräften 12 werden in Teilschritt 306 im gezeigten Beispiel der Fig. 2 in einem Zwischenschritt zunächst die jeweiligen Reibenergien berechnet, wobei die weiteren Einflussparameter 16 berücksichtigt werden. Neben den Informationen über das Laufstreifenmaterial des Fahrzeugreifens und zu der Anfangsprofiltiefe am Anfang des Fahrabschnitts, werden in Teilschritt 306 insbesondere weitere Reifenparameter 16c berücksichtigt, nämlich Informationen zur Reifengröße, zur Profilgeometrie und zur Reifensteifigkeit. Hierbei wird im bevorzugten Verfahren der Fig. 2 insbesondere ein Druckunterschied zwischen dem inneren und dem äußeren Reifen der Zwillingsbereifung berücksichtigt, welcher durch Drucksensoren in den Reifen während der Fahrt im Fahrabschnitt ermittelt wird.

Darüber hinaus werden in Teilschritt 306 auch Umgebungsparameter 16b in der Form von Skalierungsfaktoren berücksichtigt. Hierbei werden Informationen zur Umgebungstemperatur und zur Fahrbahnfeuchtigkeit durch fahrzeugeigene Sensoren bereitgestellt. Im Gegensatz hierzu werden Informationen über die Fahrbahnrauigkeit aus zeitabhängigen GPS-Daten abgeleitet, die mit einer Straßenkarte korreliert werden, in der typische mittlere Fahrbahnrauigkeiten für unterschiedliche Straßen bzw. für Straßentypen (z.B. Autobahn oder Landstraße) notiert sind.

In Teilschritt 308 wird aus den erhaltenen Ergebnissen eine Abriebsschärfezahl 14 in der Form eines einzelnen Wertes ermittelt, beispielsweise als Integral der im Lichte der jeweiligen Einflussfaktoren gewichteten Krafteinwirkung über die Zeit im Fahrabschnitt.

Durch die gestrichelten Pfeile wird in Fig. 2 angezeigt, dass der Positionskorrekturfaktor 18 in einem oder mehreren der Teilschritte 304, 306 oder 308 eingesetzt wird, um der unterschiedlichen Belastung der Fahrzeugreifen in Zwillingspaketen Rechnung zu tragen. Hierdurch wird berücksichtigt, dass die kurvenaußenseitigen Fahrzeugreifen der Zwillingsbereifung bei Kurvenfahrten stärkere Kräfte 12 erfahren als die kurveninnenseitigen Fahrzeugreifen. Bei einer ungleichen Verteilung von Links- und Rechtskurven im Fahrabschnitt, bzw. einer allgemeinen unterschiedlichen absoluten Belastung in den unterschiedlichen Kurvenrichtungen, wie sie beispielsweise daraus resultieren könnte, dass der Fahrzeugführer Linkskurven grundsätzlich schneller durchfährt, ergibt sich der Positionskorrekturfaktor 18. Dieser kann beispielsweise auf die Kraftkomponente Fy(t) angewandt werden und beispielsweise darin resultieren, dass einer der Fahrzeugreifen im Zwillingspaket bei der Berechnung der Kräfte 12 mit 5 % mehr und der andere mit 5 % weniger belastet wird im Vergleich zur Gleichbehandlung der Reifen.

In Verfahrensschritt d) 400 wird im bevorzugten Verfahren der Fig. 1 die Endprofiltiefe am Ende des Fahrabschnitts für den Fahrzeugreifen ausgehend von der jeweiligen Anfangsprofiltiefe am Anfang des Fahrabschnitts und unter Berücksichtigung der jeweiligen Abriebsschärfezahl 14 abgeschätzt, wobei dies im gezeigten Beispiel der Fig. 1 durch einen auf die Fahrdistanz gewichteten Abgleich der bestimmten Abriebsschärfezahl 14 mit relativen Profiltiefenänderungen erfolgt, die für möglichst gleichartige Fahrzeugreifen bei inhärent möglichst ähnlichen Einflussparametern 16 in Folge von bekannten Referenzabriebsschärfezahlen erhalten wurden, wobei die absolute Endprofiltiefe beispielsweise aus der Anfangsprofiltiefe und der relativen Änderung erhalten werden kann. Der gestrichelte Pfeil in Fig. 1 zeigt an, dass die derart abgeschätzte Endprofiltiefe am Ende eines ersten Fahrabschnitts in einem anschließenden erfindungsgemäßen Verfahren als Anfangsprofiltiefe am Anfang eines anschließenden, zweiten Fahrabschnitts eingesetzt werden kann, um eine zwischenzeitliche Messung der Profiltiefe zu vermeiden.

Abschließend ist in Fig. 1 auch der Verfahrensschritt e) 500 visualisiert, in dem dem Fahrzeugführer eine Information über die abgeschätzte Endprofiltiefe des inneren und des äußeren Fahrzeugreifens am Ende des soeben absolvierten Fahrabschnitts über ein Display bereitgestellt wird.

### Bezugszeichenliste

- 10: Fahrparameter
- 12: Kräfte
- 14: Abriebsschärfezahl
- 16: Einflussparameter
- 16a: Fahrzeugparameter
- 16b: Umgebungsparametern
- 16c: Reifenparametern
- 18: Positionskorrekturfaktor

## Patentansprüche

1. Verfahren zur Abschätzung der Profiltiefe von Fahrzeugreifen bei einem Fahrzeug mit Zwillingsbereifung, **gekennzeichnet durch** die die Verfahrensschritte:
a) Fahren eines Fahrzeuges entlang einer vorbestimmten Fahrdistanz in einem Fahrabschnitt, wobei das Fahrzeug zumindest eine Achse mit zumindest einer Zwillingsbereifung mit einem inneren Fahrzeugreifen und einem äußeren Fahrzeugreifen umfasst,
b) Ermitteln einer Mehrzahl von Fahrparametern (10) des Fahrzeugs während der Fahrt im Fahrabschnitt, wobei die Mehrzahl von Fahrparametern (10) zumindest die Querbeschleunigung umfasst, sowie jeweils für den inneren Fahrzeugreifen und den äußeren Fahrzeugreifen der Zwillingsbereifung die Verfahrensschritte:
c) Kalkulieren der im Fahrabschnitt auf den Fahrzeugreifen wirkenden Kräfte (12) ausgehend von den ermittelten Fahrparametern (10) und Bestimmen einer dem Fahrabschnitt zugeordneten Abriebsschärfezahl (14), bestimmt gemäß dem in der ursprünglichen Beschreibung auf Seite 28, Zeile 10 bis Seite 30, Zeile 14 offenbarten Verfahren, aus den kalkulierten Kräften (12) unter Berücksichtigung einer Mehrzahl von Einflussparametern (16), wobei die Einflussparameter (16) ausgewählt sind aus der Gruppe bestehend aus Fahrzeugparametern (16a), Umgebungsparametern (16b) und Reifenparametern (16c), wobei die Einflussparameter (16) zumindest Informationen über das Laufstreifenmaterial des Fahrzeugreifens und über die Anfangsprofiltiefe am Anfang des Fahrabschnitts umfassen, wobei die Position des jeweiligen Fahrzeugreifens in der Zwillingsbereifung durch einen Positionskorrekturfaktor (18) berücksichtigt wird, und
d) Abschätzen der Endprofiltiefe am Ende des Fahrabschnitts für den Fahrzeugreifen ausgehend von der jeweiligen Anfangsprofiltiefe am Anfang des Fahrabschnitts unter Berücksichtigung der jeweiligen Abriebsschärfezahl (14).

2. Verfahren nach Anspruch 1, wobei die vorbestimmte Fahrdistanz im Bereich von 0,5 bis 20 km liegt.

3. Verfahren nach einem der Ansprüche 1 oder 2, wobei das Ermitteln der Mehrzahl von Fahrparametern (10) des Fahrzeugs für jeden Fahrparameter (10) mit einer dem Fahrparameter (10) zugeordneten Ermittlungsfrequenz erfolgt, wobei die Ermittlungsfrequenz 4 Hz oder mehr beträgt.

4. Verfahren nach einem der Ansprüche 1 bis 3, wobei das Ermitteln der Mehrzahl von Fahrparametern (10) des Fahrzeugs durch Auswertung von zeitabhängigen Positionsdaten, bevorzugt GPS-Daten, erfolgt oder dadurch unterstützt wird.

5. Verfahren nach einem der Ansprüche 1 bis 4, wobei das Kalkulieren der im Fahrabschnitt auf den Fahrzeugreifen wirkenden Kräfte (12) und/oder das Bestimmen der dem Fahrabschnitt zugeordneten Abriebsschärfezahl (14) unter Berücksichtigung eines oder mehrerer Fahrzeugparameter (16a) erfolgt, wobei die Fahrzeugparameter (16a) ausgewählt sind aus der Gruppe bestehend aus Informationen zum Radstand, zur Spurbreite, zum Fahrzeuggewicht, zur Radlast, zum Reifensturz, zum Schräglauf, zur Antriebsart und zum Antriebskonzept.

6. Verfahren nach einem der Ansprüche 1 bis 5, wobei das Kalkulieren der im Fahrabschnitt auf den Fahrzeugreifen wirkenden Kräfte (12) und/oder das Bestimmen der dem Fahrabschnitt zugeordneten Abriebsschärfezahl (14) unter Berücksichtigung eines oder mehrerer Umgebungsparameter (16b) erfolgt, wobei die Umgebungsparameter (16b) ausgewählt sind aus der Gruppe bestehend aus Informationen zur Umgebungstemperatur, zur Fahrbahnfeuchtigkeit, zur Witterung und zur Fahrbahnrauigkeit.

7. Verfahren nach einem der Ansprüche 1 bis 6, wobei das Kalkulieren der im Fahrabschnitt auf den Fahrzeugreifen wirkenden Kräfte (12) und/oder das Bestimmen der dem Fahrabschnitt zugeordneten Abriebsschärfezahl (14) unter Berücksichtigung von drei oder mehr Reifenparametern (16c) erfolgt, wobei die Reifenparameter (16c) ausgewählt sind aus der Gruppe bestehend aus Informationen zur Reifengröße, zum Reifendruck, zur Profilgeometrie und zur Reifensteifigkeit,

8. Verfahren nach Anspruch 7, wobei zumindest einer der Reifenparameter (16c), bevorzugt der Reifendruck, für den inneren Fahrzeugreifen und den äußeren Fahrzeugreifen verschieden ist.

9. Verfahren nach einem der Ansprüche 1 bis 8, wobei der Positionskorrekturfaktor (18) als Korrekturfaktor auf die in Folge von Querbeschleunigung erfahrenen Kräfte (12) angewandt wird.

10. Verfahren nach einem der Ansprüche 1 bis 9, wobei die Anfangsprofiltiefe am Anfang des Fahrabschnitts vor dem Fahrabschnitt gemessen wird.

11. Verfahren nach einem der Ansprüche 1 bis 9, wobei das Verfahren für zwei oder mehr Fahrabschnitte durchgeführt wird, wobei für die Anfangsprofiltiefe am Anfang des zweiten oder weiteren Fahrabschnitts die für den vorangegangenen Fahrabschnitt abgeschätzte Endprofiltiefe am Ende des vorangegangenen Fahrabschnitts verwendet wird.

12. Fahrzeug, umfassend:
i) zumindest eine Achse mit zumindest einer Zwillingsbereifung mit einem inneren Fahrzeugreifen und einem äußeren Fahrzeugreifen,
**gekennzeichnet durch**
ii) einen oder mehrere Fahrparametersensoren zur Ermittlung einer Mehrzahl von Fahrparametern (10) des Fahrzeugs während der Fahrt entlang einer vorbestimmten Fahrdistanz in einem Fahrabschnitt, wobei die Mehrzahl von Fahrparametern (10) zumindest die Querbeschleunigung umfasst, und
iii) eine elektronische Datenverarbeitungseinrichtung, wobei die Datenverarbeitungsvorrichtung dazu eingerichtet ist, jeweils für den inneren Fahrzeugreifen und den äußeren Fahrzeugreifen der Zwillingsbereifung die folgenden Berechnungsschritte auszuführen:
cc) Kalkulieren der im Fahrabschnitt auf den Fahrzeugreifen wirkenden Kräfte (12) ausgehend von den ermittelten Fahrparametern (10) und Bestimmen einer dem Fahrabschnitt zugeordneten Abriebsschärfezahl (14),bestimmt gemäß dem in der ursprünglichen Beschreibung auf Seite 28, Zeile 10 bis Seite 39, Zeile 14 offenbarten Verfahren, aus den kalkulierten Kräften (12) unter Berücksichtigung einer Mehrzahl von Einflussparametern (16), wobei die Einflussparameter (16) ausgewählt sind aus der Gruppe bestehend aus Fahrzeugparametern (16a), Umgebungsparametern (16b) und Reifenparametern (16c), wobei die Einflussparameter (16) zumindest Informationen über das Laufstreifenmaterial des Fahrzeugreifens und über die Anfangsprofiltiefe am Anfang des Fahrabschnitts umfassen,
wobei die Position des jeweiligen Fahrzeugreifens in der Zwillingsbereifung durch einen Positionskorrekturfaktor (18) berücksichtigt wird, und
dd) Abschätzen der Endprofiltiefe am Ende des Fahrabschnitts für den Fahrzeugreifen ausgehend von der jeweiligen Anfangsprofiltiefe am Anfang des Fahrabschnitts unter Berücksichtigung der jeweiligen Abriebsschärfezahl (14).

## Claims

1. Method for estimating the profile depth of vehicle tyres on a vehicle with twin tyres, **characterized by** the method steps of:
a) driving a vehicle over a predetermined driving distance in a driving section, the vehicle comprising at least one axle with at least one set of twin tyres comprising an inner vehicle tyre and an outer vehicle tyre,
b) determining a plurality of driving parameters (10) of the vehicle during the journey in the driving section, the plurality of driving parameters (10) comprising at least the lateral acceleration,
as well as the following method steps in each case for the inner vehicle tyre and the outer vehicle tyre of the set of twin tyres:
c) calculating, on the basis of the determined driving parameters (10), the forces (12) acting on the vehicle tyre in the driving section and determining an abrasion index (14), assigned to the driving section and determined according to the method disclosed on page 28, line 10 to page 30, line 14 of the original description, from the calculated forces (12) while taking a plurality of influencing parameters (16) into account, the influencing parameters (16) being selected from the group consisting of vehicle parameters (16a), environmental parameters (16b) and tyre parameters (16c), the influencing parameters (16) comprising at least information concerning the tread material of the vehicle tyre and concerning the initial profile depth at the beginning of the driving section, with the position of the respective vehicle tyre in the set of twin tyres being taken into account by a position correction factor (18), and
d) estimating the final profile depth at the end of the driving section for the vehicle tyre on the basis of the respective initial profile depth at the beginning of the driving section while taking the respective abrasion index (14) into account.

2. Method according to Claim 1, wherein the predetermined driving distance is in the range of 0.5 to 20 km.

3. Method according to either of Claims 1 and 2, wherein the determination of the plurality of driving parameters (10) of the vehicle is carried out for each driving parameter (10) with a determination frequency assigned to the driving parameter (10), wherein the determination frequency is 4 Hz or more.

4. Method according to one of Claims 1 to 3, wherein the determination of the plurality of driving parameters (10) of the vehicle is carried out by evaluating time-dependent position data, preferably GPS data, or is assisted thereby.

5. Method according to one of Claims 1 to 4, wherein the calculation of the forces (12) acting on the vehicle tyre in the driving section and/or the determination of the abrasion index (14) assigned to the driving section is/are carried out while taking one or more vehicle parameters (16a) into account, the vehicle parameters (16a) being selected from the group consisting of information on the wheelbase, the lane width, the vehicle weight, the wheel load, the tyre camber, the skew, the drive type and the drive concept.

6. Method according to one of Claims 1 to 5, wherein the calculation of the forces (12) acting on the vehicle tyre in the driving section and/or the determination of the abrasion index (14) assigned to the driving section is/are carried out while taking one or more environmental parameters (16b) into account, the environmental parameters (16b) being selected from the group consisting of information on the ambient temperature, the road moisture, the weather and the road roughness.

7. Method according to one of Claims 1 to 6, wherein the calculation of the forces (12) acting on the vehicle tyre in the driving section and/or the determination of the abrasion index (14) assigned to the driving section is/are carried out while taking three or more tyre parameters (16c) into account, the tyre parameters (16c) being selected from the group consisting of information on the tyre size, the tyre pressure, the profile geometry and the tyre stiffness.

8. Method according to Claim 7, wherein at least one of the tyre parameters (16c), preferably the tyre pressure, is different for the inner vehicle tyre and the outer vehicle tyre.

9. Method according to one of Claims 1 to 8, wherein the position correction factor (18) is applied as a correction factor to the forces (12) experienced as a result of lateral acceleration.

10. Method according to one of Claims 1 to 9, wherein the initial profile depth at the beginning of the driving section is measured before the driving section.

11. Method according to one of Claims 1 to 9, wherein the method is carried out for two or more driving sections, wherein the final profile depth at the end of the preceding driving section, as estimated for the preceding driving section, is used for the initial profile depth at the beginning of the second or further driving section.

12. Vehicle comprising:
i) at least one axle with at least one set of twin tyres having an inner vehicle tyre and an outer vehicle tyre,
**characterized by**
ii) one or more driving parameter sensors for determining a plurality of driving parameters (10) of the vehicle during the journey over a predetermined driving distance in a driving section, the plurality of driving parameters (10) comprising at least the lateral acceleration, and
iii) an electronic data processing device, the data processing apparatus being configured to carry out the following calculation steps in each case for the inner vehicle tyre and the outer vehicle tyre of the set of twin tyres:
cc) calculating, on the basis of the determined driving parameters (10), the forces (12) acting on the vehicle tyre in the driving section and determining an abrasion index (14), assigned to the driving section and determined according to the method disclosed on page 28, line 10 to page 39, line 14 of the original description, from the calculated forces (12) while taking a plurality of influencing parameters (16) into account, the influencing parameters (16) being selected from the group consisting of vehicle parameters (16a), environmental parameters (16b) and tyre parameters (16c), the influencing parameters (16) comprising at least information concerning the tread material of the vehicle tyre and concerning the initial profile depth at the beginning of the driving section,
with the position of the respective vehicle tyre in the set of twin tyres being taken into account by a position correction factor (18), and
dd) estimating the final profile depth at the end of the driving section for the vehicle tyre on the basis of the respective initial profile depth at the beginning of the driving section while taking the respective abrasion index (14) into account.

## Revendications

1. Procédé permettant d'estimer la profondeur de sculpture des pneus de véhicule sur un véhicule à pneus jumelés, **caractérisé par** les étapes de procédé consistant à :
a) conduire un véhicule sur un trajet prédéterminé dans un tronçon de conduite, le véhicule comprenant au moins un essieu pourvu d'au moins un jeu de pneus jumelés avec un pneu de véhicule intérieur et un pneu de véhicule extérieur,
b) établir une pluralité de paramètres de conduite (10) du véhicule pendant le trajet sur le tronçon de conduite, la pluralité de paramètres de conduite (10) comprenant au moins une accélération transversale,
ainsi que respectivement pour le pneu de véhicule intérieur et le pneu de véhicule extérieur du jeu de pneus jumelés, les étapes de procédé consistant à :
c) calculer les forces (12) agissant sur le pneu de véhicule dans le tronçon de conduite, en partant des paramètres de conduite (10) établis, et déterminer un coefficient de sévérité d'abrasion (14) associé au tronçon de conduite, déterminé selon le procédé divulgué dans la description d'origine de la page 28, ligne 10 à la page 30, ligne 14, à partir des forces calculées (12) en tenant compte d'une pluralité de paramètres d'influence (16), dans lequel les paramètres d'influence (16) sont sélectionnés dans le groupe composé de paramètres de véhicule (16a), de paramètres d'environnement (16b) et de paramètres de pneu (16c), dans lequel les paramètres d'influence (16) comprennent au moins des informations concernant le matériau de bande de roulement du pneu de véhicule et concernant la profondeur de sculpture initiale au début du tronçon de conduite, dans lequel la position du pneu de véhicule respectif dans le jeu de pneus jumelés est prise en compte par un facteur de correction de position (18), et
d) estimer la profondeur de sculpture finale à la fin du tronçon de conduite pour le pneu de véhicule en partant de la profondeur de sculpture initiale respective au début du tronçon de conduite en tenant compte du coefficient de sévérité d'abrasion (14) respectif.

2. Procédé selon la revendication 1, dans lequel le trajet prédéterminé est compris dans la plage de 0,5 à 20 km.

3. Procédé selon l'une quelconque des revendications 1 ou 2, dans lequel l'établissement de la pluralité de paramètres de conduite (10) du véhicule pour chaque paramètre de conduite (10) est effectué à une fréquence d'établissement associée au paramètre de conduite (10), la fréquence d'établissement étant de 4 Hz ou plus.

4. Procédé selon l'une quelconque des revendications 1 à 3, dans lequel l'établissement de la pluralité de paramètres de conduite (10) du véhicule est effectué par l'évaluation de données de position dépendant du temps, de préférence de données GPS, ou est assisté par celle-ci.

5. Procédé selon l'une quelconque des revendications 1 à 4, dans lequel le calcul des forces (12) agissant dans le tronçon de conduite sur le pneu de véhicule, et/ou la détermination du coefficient de sévérité d'abrasion (14) associé au tronçon de conduite sont effectués en tenant compte d'un ou de plusieurs paramètres de véhicule (16a), dans lequel les paramètres de véhicule (16a) sont sélectionnés dans le groupe composé d'informations sur l'empattement, l'écartement de voie, le poids du véhicule, la charge sur roue, la cambrure du pneu, la dérive, le type d'entraînement et le concept d'entraînement.

6. Procédé selon l'une quelconque des revendications 1 à 5, dans lequel le calcul des forces (12) agissant dans le tronçon de conduite sur le pneu de véhicule, et/ou la détermination du coefficient de sévérité d'abrasion (14) associé au tronçon de conduite sont effectués en tenant compte d'un ou de plusieurs paramètres d'environnement (16b), dans lequel les paramètres d'environnement (16b) sont sélectionnés dans le groupe composé d'informations sur la température ambiante, l'humidité de la chaussée, la météo et la rugosité de la chaussée.

7. Procédé selon l'une quelconque des revendications 1 à 6, dans lequel le calcul des forces (12) agissant dans le tronçon de conduite sur le pneu de véhicule, et/ou la détermination du coefficient de sévérité d'abrasion (14) associé au tronçon de conduite sont effectués en tenant compte de trois ou de plusieurs paramètres de pneu (16c), dans lequel les paramètres de pneu (16c) sont sélectionnés dans le groupe composé d'informations sur la taille du pneu, la pression du pneu, la géométrie de la sculpture et la rigidité du pneu.

8. Procédé selon la revendication 7, dans lequel au moins l'un des paramètres de pneu (16c), de préférence la pression du pneu, est différent pour le pneu de véhicule intérieur et le pneu de véhicule extérieur.

9. Procédé selon l'une quelconque des revendications 1 à 8, dans lequel le facteur de correction de position (18) est appliqué en tant que facteur de correction aux forces (12) subies suite à une accélération transversale.

10. Procédé selon l'une quelconque des revendications 1 à 9, dans lequel la profondeur de sculpture initiale au début du tronçon de conduite est mesurée avant le tronçon de conduite.

11. Procédé selon l'une quelconque des revendications 1 à 9, dans lequel le procédé est effectué pour deux ou plusieurs tronçons de conduite, dans lequel la profondeur de sculpture finale estimée pour le tronçon de conduite précédent à la fin du tronçon de conduite précédent est utilisée pour la profondeur de sculpture initiale au début du deuxième ou d'autres tronçons de conduite.

12. Véhicule, comprenant :
i) au moins un essieu pourvu d'au moins un jeu de pneus jumelés avec un pneu de véhicule intérieur et un pneu de véhicule extérieur,
**caractérisé par**
ii) un ou plusieurs capteurs de paramètre de véhicule pour établir la pluralité de paramètres de conduite (10) du véhicule pendant le trajet sur un trajet prédéterminé dans un tronçon de conduite, la pluralité de paramètres de conduite (10) comprenant au moins l'accélération transversale, et
iii) un dispositif de traitement de données électronique, le dispositif de traitement de données étant conçu pour effectuer respectivement pour le pneu de véhicule intérieur et le pneu de véhicule extérieur du jeu de pneus jumelés les étapes de calcul suivantes consistant à :
cc) calculer les forces (12) agissant sur le pneu de véhicule dans le tronçon de conduite, en partant des paramètres de conduite (10) établis, et déterminer un coefficient de sévérité d'abrasion (14) associé au tronçon de conduite, déterminé selon le procédé divulgué dans la description d'origine de la page 28, ligne 10 à la page 39, ligne 14, à partir des forces calculées (12) en tenant compte d'une pluralité de paramètres d'influence (16), dans lequel les paramètres d'influence (16) sont sélectionnés dans le groupe composé de paramètres de véhicule (16a), de paramètres d'environnement (16b) et de paramètres de pneu (16c), dans lequel les paramètres d'influence (16) comprennent au moins des informations concernant le matériau de bande de roulement du pneu de véhicule et concernant la profondeur de sculpture initiale au début du tronçon de conduite,
dans lequel la position du pneu de véhicule respectif dans le jeu de pneus jumelés est prise en compte par un facteur de correction de position (18), et
dd) estimer la profondeur de sculpture finale à la fin du tronçon de conduite pour le pneu de véhicule en partant de la profondeur de sculpture initiale respective au début du tronçon de conduite en tenant compte du coefficient de sévérité d'abrasion (14) respectif.
